# EUROPÄISCHE PATENTSCHRIFT

(11) **EP 1 090 737 B1**
(45) Veröffentlichungstag und Bekanntmachung des Hinweises auf die Patenterteilung: **05.11.2003**
(21) Anmeldenummer: 00121405.5
(22) Anmeldetag: 29.09.2000
(51) Int. Cl.: B29C 65/06

(54) **Fügeeinheit für Haftnähte, inbesondere Vibrationsverschweissungen**
Apparatus for making joints, in particular vibration welds
Appareil pour la réalisation de joints, en particulier des soudures par vibrations

(30) Priorität: 08.10.1999 DE 19948515
(43) Veröffentlichungstag der Anmeldung: 11.04.2001
(73) Patentinhaber: BIELOMATIK LEUZE GmbH + Co., D-72639 Neuffen (DE)
(72) Erfinder: Natrop, Joachim, Dr., 72581 Dettingen/Erms (DE)
(74) Vertreter: Patentanwälte Ruff, Wilhelm, Beier, Dauster & Partner

(56) Entgegenhaltungen:
- EP-A- 0 563 581
- EP-A- 0 687 547
- BE-A- 666 748
- DE-A- 3 700 981
- GB-A- 2 217 255
- GB-A- 2 279 035
- US-A- 5 670 108
- PATENT ABSTRACTS OF JAPAN vol. 1998, no. 12, 31. Oktober 1998 (1998-10-31) & JP 10 193460 A (NOK CORP), 28. Juli 1998 (1998-07-28)
- PATENT ABSTRACTS OF JAPAN vol. 008, no. 073 (M-287), 5. April 1984 (1984-04-05) & JP 58 219019 A (KOJIMA PRESS KOGYO KK), 20. Dezember 1983 (1983-12-20)
- PATENT ABSTRACTS OF JAPAN vol. 1996, no. 09, 30. September 1996 (1996-09-30) & JP 08 132529 A (TOYOTA MOTOR CORP), 28. Mai 1996 (1996-05-28)

## Beschreibung

Die Erfindung betrifft eine Fügeeinheit für Nahtverbindungen, insbesondere solche, bei denen wanderungsfähiges Material anfällt, das zwischen den einander gegenüberliegenden Fügezonen oder Flanschflächen herausgelangen könnte. Solches Material kann Fügematerial sein, das unmittelbar von den Fügeflanschen gebildet wird. Es handelt sich dabei um Feststoffe, wie Partikel, die seitlich zwischen den Fügeflächen austreten können.

Bei der Herstellung von Schmelz- oder Schweißverbindungen an Bauteilen aus Kunststoff oder dergleichen kann die benötigte Energie zum Aufschmelzen des Fügemateriales dadurch erzielt werden, daß die Fügeflächen oszillierend aneinander gerieben werden bis sie miteinander verschweißen. Die Fügeflächen reiben dabei mit einer Geschwindigkeit von 500 bis 1000 mm/sec 2 - 8 sec aneinander und zwar mit einer Schwingungsfrequenz von 85 bis 250 Hz und einer Schwingungsamplitude von 0,5 bis 2 mm. Die Fügeflächen werden dabei etwa 0,5 bis 1 mm tief zuerst abgerieben und dann abgeschmolzen. Dabei werden die Fügeflansche entsprechend einander angenähert. Vor Erreichen der Schmelztemperatur entstehen in der Feststoffreibphase die Abrieb-Partikel, die zwischen den Flanschflächen verbleiben sollten. Werden die beiden Bauteile oder Schalen mit ununterbrochen ringförmigen Fügeflanschen, Flanschflächen bzw. Fügeflächen mit der Naht zu einem Behälter verbunden, so darf das genannte Material unabhängig von der Betriebszeit des Behälters nicht in dessen Inneres gelangen. Dort würde es zu Verunreinigungen des Behälterinhaltes führen.

Speziell gilt dies bei Kraftstoffbehältern für Verbrennungsmaschinen, deren Leitungswege vom Tank bis zur Brennkammer durch die Partikel verstopft werden können. Zwar kann man nach der Verbindung das Behälterinnere reinigen, jedoch ist dies äußerst aufwendig und kaum vollständig zu erreichen. Auch bei einer verdeckten Naht ist nicht hinreichend sichergestellt, daß feine oder feinste Feststoff-Partikel zwischen den Abdeckungen der Flanschflächen ausgetrieben werden und an die großen Oberflächen der an ihren Flanschen verbundenen Wandungen gelangen.

Aus der JP 101 93 460 ist eine Fügeeinheit bekannt, die beiderseits des Fügespaltes je eine Kammer aufweist, die den bei einer Vibrationsschweißung auftretenden Grat aufnehmen soll. Die Kammern sind nach außen und innen nach der Verschweißung dicht abgeschlossen.

Die JP 081 32 529 zeigt eine ähnliche Anordnung, bei der jedoch in jede an den Fügebereich angrenzende Kammer ein Klebstoff eingefüllt wird, der auch über die Fügenaht austritt, was ja durch die Vibrationsschweißung gerade vermieden werden soll.

Der Erfindung liegt die Aufgabe zugrunde, eine Fügeeinheit zu schaffen, bei welcher Nachteile bekannter Ausbildungen bzw. der beschriebenen Art vermieden sind. Insbesondere soll an einer oder beiden äußeren Seiten der dichten Naht verhindert sein, daß das genannte Material zwischen den Flanschflächen austreten kann. Die Fügeflansche, insbesondere die Flanschflächen, sollen einfach im Aufbau und in der Handhabung sein.

Diese Aufgabe wird durch den Anspruch 1 gelöst.

Erfindungsgemäß sind Mittel vorgesehen, um ein Wandern des meisten des genannten Materiales oder jeglichen solchen Materiales nach mindestens einer Seite aus dem Fügespalt zwischen den Flanschflächen zu verhindern. Solche Mittel sind mehrere Kammern zur Aufnahme des Materiales zwischen den Flanschflächen und bilden eine Dichtung gegen das Austreten des Materiales. Die Dichtung kann eine kompakte Labyrinthdichtung sein. Die Dichtglieder der beiden Flansche berühren einander nicht oder allenfalls ohne signifikante Pressung. Sie reiben dann unter der Vibration nicht so aneinander, daß Abrieb entsteht. Die engsten Spalte der Dichtung können mindestens 0,2 oder 0,4 mm betragen. Die zugehörigen Spaltenebenen sind parallel zu den Fügeflächen und daher zur Vibrationsrichtung. Die einander unmittelbar gegenüberliegenden Flanken der Dichtglieder können bei der Vibration berührungsfrei bleiben oder in Berührung gelangen, insbesondere ohne signifikanten Druck.

Besonders zweckmäßig ist es, wenn die unmittelbar an die Fügeflächen anschließende Kammer größer ist als die nächste oder weiter entfernt von den Fügeflächen liegende Kammer, welche über eine Dichtstelle an die größere Kammer anschließen kann. Die parallel zur Vibrationsbewegung zu messende Breite der größeren Kammer ist so groß, daß die zugehörigen Seitenflächen auch bei größter Annäherung während der Vibration im Abstand voneinander liegen und daher auch bei am stärksten verengter Kammer noch Raum zur Aufnahme des Materiales bleibt. Das Material wird daher aus dieser Kammer nicht oder nur in geringsten Mengen in die nächste Kammer ausgetrieben. Erfolgt ein Übertritt von Material in die nächste Kammer, so bleibt es ebenso wie in der größeren Kammer während der gesamten Gebrauchszeit des geschweißten Gegenstandes gespeichert.

Durch die Dichtstellen kann das gespeicherte Medium nicht aus den Seitenfugen der Naht ausgeschwemmt werden. Der jeweilige Stau spalt oder alle Stauspalte sind schmaler als die Fügeflächen. Im Querschnitt kann der Fügespalt an jeder äußeren Seite einen engen Dichtspalt bilden. Zwischen diesem Dichtspalt und den Fügeflächen sind dann mindestens zwei oder drei Kammern und mindestens eine oder zwei Dichtspalte vorgesehen, welche zweckmäßig quer zueinander und/oder zu den Fügeflächen versetzt sind.

Besonders zweckmäßig ist es, wenn der Dichtspalt schmaler als die schmalste Fügefläche bzw. die Naht ist. Der Dichtspalt kann dann von einem Steg oder einer Rippe begrenzt sein, deren Dicke höchstens 2 oder 1 mm beträgt. Dadurch kann der Steg auch um seine Wurzel schwenken und elastische Kippbewegungen ausführen, z. B. bei Verengung der Kammer dem Material ausweichen und so die minimale Kammergröße an den Kammerinhalt anpassen, ohne daß Abrieb am Steg entsteht.

Die geschlossenen oder nur im Bereich der Dichtspalte offenen Kammern sind auf beiden Seiten der Mittelebene der Fügeflächen nicht symmetrisch zu dieser Mittelebene ausgebildet, welche rechtwinklig zu den Fügeflächen liegt. Insbesondere können zwischen der gegen Emmision zu schützenden äußeren Seite des Fügespaltes und den Fügeflächen mehr bzw. größere Kammern oder mehr Dichtspalte vorgesehen sein als auf der anderen Seite.

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen
- Fig. 1: eine erfindungsgemäße Fügeeinheit im Querschnitt,
- Fig. 2: eine weitere Fügeeinheit im Querschnitt und wesentlich vergrößerter Darstellung, und
- Fig. 3: eine weitere Ausführungsform im Querschnitt.

Die Fügeeinheit 1 dient zur unlösbaren Schweißverbindung zweier schalenförmiger Bauteile 2, 3 aus thermoplastischem Kunststoff zu einem dichten Behälter mittels VibrationsSchweißen. Dabei wird die zum Aufschmelzen des Kunststoffes benötigte Energie durch unmittelbare gegenseitige Reibung der Grenz- bzw. Fügeflächen erzeugt. Zu Beginn dieser oszillierenden Reibung, nämlich in der Feststoffreibphase, sind die Fügeflächen noch fest. Dann schließt sich eine zuerst instationäre und dann stationäre Reibphase an, in der die Fügeflächen einen gemeinsamen Film aus Kunststoffschmelze als Fügematerial bilden. Daran schließt sich als letzte Phase die Abkühlphase an, in welcher das Fügematerial und daher die Schweißverbindung erstarrt. Die Bauteile 2, 3 bilden Wände 4, 5 des Behälters mit Innenflächen 6 und Außenflächen 7. Die äußeren Flächen 6 und äußeren Flächen 7 fluchten jeweils miteinander.

Jeder Bauteil 2 bzw. 3 weist einen ringförmigen Flansch 8 bzw. 9 auf, der am Rand der zugehörigen Wand 4 bzw. 5 nur über die Außenfläche 7 vorsteht. Die beiden Flansche 8, 9 werden über eine verdeckte Schweißnaht 10 miteinander verbunden, welche in einer zu den Wänden 4, 5 rechtwinkligen Nahtebene 11 liegt. Die Mittelebene 12 der Naht 10 liegt mit Abstand außerhalb der Außenflächen 7 und hat von der Fläche 7 größeren Radialabstand als der Außenumfang der Flansche 8, 9. Die zu den Flanschachsen rechtwinklige und zur Nahtebene 11 parallele Mittelebene 13 zwischen den Flanschen 8, 9 liegt im Abstand von der Nahtebene 11. Die Richtung 14 der Schweißvibration liegt parallel zu den Ebenen 11, 13. Während der Vibration wird in Richtung 15 rechtwinklig zu den Ebenen 11, 13 Druck auf den einen Flansch 8 ausgeübt, so daß dieser gegen den anderen, abgestützten Flansch 9 gepreßt wird.

Bei der Vibration und Anpressung berühren sich nur die verdeckten Fügeflächen 16, 17 der beiden Flansche 8, 9. Die Flächen 16, 17 sind ringförmig und liegen im Axialschnitt in derselben Mittelebene 12. Die Fläche 16 des Flansches 8 ist um 1 mm breiter als die Fläche 17 des Flansches 9. Das Fügefeld 18, nämlich die Gesamtausdehnung der Naht 10, ist daher gleich der Fläche 17.

In der Feststoffreibphase werden von den Flächen 16, 17 Feststoff-Partikel 19 abgerieben, die seitlich zwischen den Flächen 16, 17 in den Raum zwischen den Flanschen 8, 9 austreten und während der weiteren Vibration dazu neigen, bis an die Innenfläche 6 ausgetrieben zu werden. Dagegen sind Sperrmittel 20, nämliche eine Labyrinthdichtung, vorgesehen. Die Sperre 20 weist zwischen dem Feld 18 und der Innenfläche 6 drei Spalte oder Stauspalte 21, 22, 23 auf, welche im Abstand voneinander liegen. Zwischen jeweils zwei Spalten ist eine Kammer 25 bzw. 26 bzw. 27 von den Flanschen 8, 9 begrenzt. Die Spalte und die Kammern sind ringförmig und liegen konzentrisch ineinander. Die Weite der Spalte beträgt mindestens 0,3 mm und höchstens 1 oder 0,5 mm. Die Breite 29 jedes Spaltes ist kleiner als die Breite 41 bzw. 42 jeder Kammer, die wiederum kleiner als die Höhe 40 jeder Kammer ist.

Die Fügefläche 16 ist durch einen Fügesteg 30 und die Fügefläche 17 durch einen Fügesteg 31 gebildet, dessen Höhe kleiner als die des Steges 30 ist, beispielsweise das 0,3-fache der Höhe 45 des Steges 30 beträgt. Die Stege 30, 31 stehen über einander zugekehrte Flächen der Flansche 8, 9 vor. Diese Flächen bilden die einander zugekehrten Böden 32, 33 aller Kammern und liegen parallel zu den Ebenen 11, 13. Die Flächen 32, 33 bilden auch jeweils eine Begrenzung jedes Spaltes. Zwischen dem Außenumfang der Flansche 8, 9 und dem Fügefeld 18 sind ebenfalls ein Spalt 24 und eine Kammer 28 vorgesehen. Im Vergleich zu dieser Seite ist die Anzahl der Spalte und Kammern auf der anderen Seite größer, so daß die Sperre 20 asymmetrisch zu Ebene 12 ausgebildet ist. Statt eines einzigen Spaltes 24 und einer einzigen Kammer 28 kann jedoch auf dieser Seite auch eine Ausbildung vorgesehen sein, wie sie zwischen der Fläche 6 und der Naht 10 erläutert ist.

Jede Kammer wird von zwei Stegen begrenzt, die entgegengesetzt über die und von den Flächen 32, 33 vorstehen sowie die Kammerflanken 34 bis 37 bilden. Jeder Steg schließt mit einer Wurzel 38 einteilig an den zugehörigen Flansch 8 bzw. 9 an und hat bis zu seiner freien Kantenfläche 39 konstante Dicke, kann jedoch in die Kante 39 abgerundet übergehen. Dabei kann die Kantenfläche 39 jedes der Stege eine ebene Fläche oder eine vollständig Konvex abgerundete Fläche bilden. Die Stegkante 39 begrenzt mit dem gegenüberliegenden Kammerboden 32 bzw. 33 den zugehörigen Spalt. Alle Spalte haben gleiche Weite.

Von den Stegen 30, 49 ist die unmittelbar an die Naht 10 anschließende Kammer 25 begrenzt. Von den Stegen 48, 49 ist die nächste Kammer 26 begrenzt und von den Stegen 48, 50 ist die letzte Kammer 27 begrenzt, welche über den Spalt 23 unmittelbar an die Fläche 6 anschließt. Der Steg 49 liegt zwischen den Stegen 30, 48 und steht entgegengesetzt zu diesen vor. Der Steg 48 liegt zwischen den Stegen 49, 50 und steht entgegengesetzt zu diesen vor. Dadurch liegen die Spalte 21, 23, 24 in einer ersten Spaltebene 43 und ein einziger Spalt 22 in einer zweiten Spaltebene 44. Beide Ebenen 43, 44 liegen parallel zu den Ebenen 11, 13, jedoch auf deren voneinander abgekehrten Seiten. Die Ebene 43 liegt beim Boden 32 und die Ebene 44 beim Boden 33. Dadurch sind die Spalte 21, 23, 24 weiter entfernt von der Ebene 11 als der Spalte 22. Von der Ebene 13 haben beide Ebenen 43, 44 gleiche Abstände.

Das zwischen den Flächen 16, 17 austretende Material 19 muß vom unteren Boden 33 über die gesamte Kammerhöhe 40 in der Kammer 25 bzw. 28 nach oben wandern, um an den nächsten Spalt 21 bzw. 24 zu gelangen. Werden dann Anteile des Materiales 19 durch den Spalt 21 getrieben, so muß dieses Material über die Höhe 40 nach unten wandern, um an den nächsten Spalt 22 zu gelangen. Sollte ein Anteil des Materiales 19 auch durch diesen Spalt 22 gelangen, so wird es vor Durchtritt durch den Spalt 23 in der Kammer 27 abgelagert. Falls erforderlich kann die Anzahl der Spalte und Kammern noch erhöht werden. Zwar kann sich in allen Kammern Abriebmaterial ablagern, jedoch ist die Anordnung so getroffen, daß die letzte Kammer 27 leer bleibt und daher auch der Behälterinhalt die Partikel nicht aus den Kammern auswaschen kann. Jede Kammer bildet einen Auffangkanal, in dem sich die Partikel auch längs durchgehend verteilen können.

Die Dicke 29 aller Stege 48 bis 51 ist gleich und höchstens so groß wie bzw. kleiner als die Breite des Feldes 18 bzw. die Dicke der Stege 30, 31. Die Stegdicke 29 kann dabei höchstens 3 oder 2 oder 1,5 mm betragen. Diese Dicke 29 ist gleich der Breite jedes Spaltes. Die Flanken 34 bis 36 der Stege liegen rechtwinklig zu den Ebenen 11, 13. So ist jede Kammer von parallen Kammerflanken begrenzt, welche einander gegenüber liegen. Durch den Abstand zwischen den Kammerflanken ergibt sich die Kammerbreite 41 bzw. 42. Die Breite 42 der Kammer 26 bzw. 27 ist gleich dem Schwingungsweg der Vibration, welcher 1 bis 2 mm beträgt. Demgegenüber ist die Breite 41 der Kammer 25 bzw. 28 um einen halben Millimeter größer. Dadurch werden die unmittelbar an die Naht 10 angrenzenden Kammern 25, 28 während der Schwingung nicht vollständig geschlossen. Auch bei stärkster Verengung der Kammer 25 bzw. 28 bleibt noch ein Restvolumen frei, um allen bereits eingetretenen Abrieb ohne signifikante Verdichtung aufnehmen zu können. Die Kammern 26, 27 dagegen können bei der Vibration abwechselnd vollständig geschlossen werden, indem ihre Flanken aneinander anschlagen, jedoch kann auch hier ein Restvolumen frei bleiben.

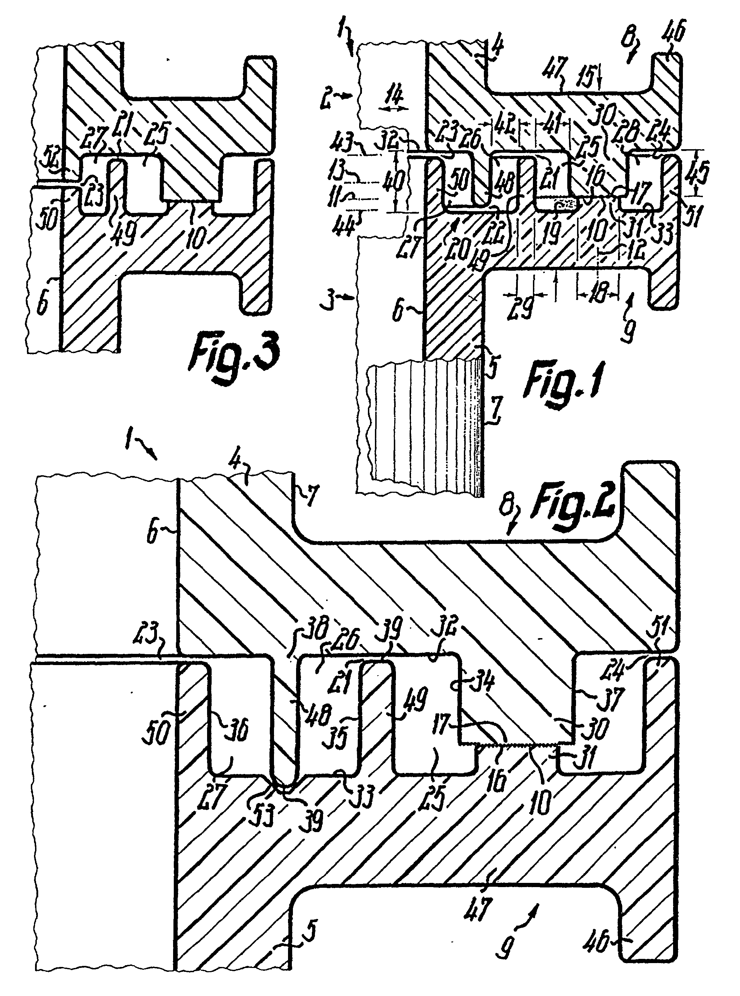

Gemäß Fig. 2 kann der Steg 48 mit seinem Ende bzw. seiner Kante 39 auch in eine Vertiefung 53 im zugehörigen Kammerboden 32 bzw. 33 eintreten und dicht an den Begrenzungen dieser Vertiefung anliegen. Die Anlage kann dabei gemäß Fig. 2 ein formschlüssiger Anschlag der Kante 39 in Richtung 15 oder eine Anlage der Stegflanken an den Flanken der Vertiefung sein, welche gegenseitige Gleitbewegung parallel zur Richtung 15 erlaubt. Da die Flansche 8, 9 bei der Vibration entsprechend der Bildung der Schmelze an den Flächen 16, 17 einander angenähert werden, erreicht im ersten Fall die Kante 39 die Anlage an der Vertiefung 53 erst am Ende der Vibration. Im zweiten Fall dagegen kann der Steg 48 bereits zu Beginn der Vibration dicht in die Vertiefung, beispielsweise eine Nut, eingreifen.

Um trotzdem die Vibration ausführen zu können, wirkt die Stegwurzel 38 als Biegegelenk, um welche diejenigen Längsabschnitte des Steges 48 oszillierend schwenken, welche quer zur Richtung 14 liegen. Die parallel zur Richtung 14 liegenden Längsabschnitte führen solche Schwenkbewegungen nicht aus. Auch werden die von diesen Längsabschnitten begrenzten Kammern nicht verengt und aufgeweitet. In jedem Fall ist die Verbindung zwischen Steg 48 und Vertiefung 53 so gewählt, daß durch die Relativbewegungen kein Abrieb entsteht. Jeder der anderen Stege 49 bis 51 kann wie der Steg 48 in den gegenüberliegenden Flansch eingreifen.

Anschließend an den Außenumfang weist jeder Flansch 8 bzw. 9 eine Verstärkung 46, beispielsweise eine Rippe, auf. Sie liegt im Abstand von der Wand 4 bzw. 5 und steht über die von der Naht 10 abgekehrte Flanschseite vor. Mit der Außenfläche 7 begrenzt der ringförmige Steg 46 eine Nut 47, deren zu den Ebenen 11, 13 paralleler Boden dazu dient, die Druckkraft in Richtung 15 bzw. die entgegengesetzt gerichtete Widerlagerkraft aufzunehmen. In der Nut 47 kann das entsprechende Werkzeug der Vibrations-Schweißmaschine sicher aufgenommen werden, ohne die Wand 4 bzw. 5 zu berühren.

Während in den Fig. 1 und 2 zwischen der Naht 10 und dem Spalt 23 drei Kammern und zwei Spalte vorgesehen sind, sind es gemäß Fig. 3 nur zwei Kammern 25, 27 und ein Spalt 21. Der Spalt 23 ist gegenüber der Ebene 43 des Spaltes 21 quer versetzt und liegt in der Mitte der Kammerhöhe 40, d. h., in der Ebene 13. Dazu ist keine der Begrenzungen des Spaltes 23 durch eine der Bodenflächen 32, 33 gebildet, sondern beide Begrenzungen sind durch die Stege 50, 52 gebildet, welche jeweils über die zugehörige Bodenfläche 32 bzw. 33 gegeneinander vorstehen und gleich hoch sind. Beide Stege 50, 52 bilden die Innenfläche 6.

Durch das erfindungsgemäße Verfahren wird auf einfache Weise verhindert, daß der Abrieb oder anderes Material zwischen den Flanschflächen an der einen oder anderen Seite der Wand 4, 5 austritt. Vor der Verschweißung werden die Bauteile 2, 3 durch Reinigen von Partikeln befreit, dann gesondert in die beiden Werkzeuge der Schweißmaschine eingelegt und von diesen dann so aneinander angelegt, daß sich nur die Flächen 16, 17 berühren. Da die Stege 30, 31 zunächst noch eine größere Höhe haben, haben dann die Spalte 21 bis 24 ihre größte Weite. Nun erfolgt die Vibration, wodurch die Flächen 16, 17 aneinander gerieben und aufgrund der Reibung erwärmt werden, bis die Schmelztemperatur des Kunststoffes erreicht ist. Unter dem Druck nehmen dann die Höhen der Stege 30, 31 ab, bis die gewünschte Spaltweite erreicht ist. Nach der Abkühlung der Naht 10 wird die Baueinheit 1 aus den Werkzeugen entfernt.

Erfindungsgemäß bilden somit zwei Bauteile 2, 3, die durch Vibrationsschweißen miteinander verbunden werden sollen, auf einer oder beiden Seiten der Schweißnaht 10 eine Labyrinthdichtung 20. Sie fängt Abrieb der Fügeflächen 16, 17 dadurch in Kammern 25, 26, 27 auf, daß der Abrieb von Kammer zu Kammer durch Spalte 21, 22 wandern muß und für den Durchtritt durch den jeweils nächsten Spalt umgelenkt wird. Dadurch bleibt der Abrieb vollständig innerhalb des Kammersystemes der Labyrinthdichtung 20 und tritt nicht zwischen den Flanschen 8, 9 aus. Ist die Dichtung 20 zwischen der Naht 10 und der Innenfläche 6 eines Behälters vorgesehen, so wird das Behälterinnere vor Verschmutzung durch den Abrieb geschützt.

Alle Merkmale jeder Ausführungsform können bei jeder der anderen Ausführungsformen vorgesehen sein. Auch kann jeder Stauspalt, jede Kammer oder jeder Steg wie jeder der übrigen entsprechenden Anordnungen ausgebildet sein. Die Merkmale und Wirkungen bzw. Maße können genau oder nur im wesentlichen bzw. etwa wie beschrieben vorgesehen sein und je nach den Erfordernissen auch stärker davon abweichen.

## Patentansprüche

1. Fügeeinheit für Haftnähte (10), wie Schmelz- oder Schweißverbindungen, insbesondere Vibrationsverschweißungen, mit Fügeflanschen (8, 9), die einander gegenüberliegende Flanschflächen mit einander in einem Fügefeld (18) durch Fügematerial (19) verbundenen Fügeflächen (16, 17) aufweisen, wobei mindestens eine Aufnahme für zwischen den Fügeflächen (16, 17) austretendes Fügematerial (19), wie Abrieb, vorgesehen ist, die wenigstens zwei nebeneinander liegende Kammern (25, 26, 27) aufweist, **dadurch gekennzeichnet, daß** zwischen den Kammern eine Sperre (20) in Form eines Stauspaltes (21 bis 23), wie eines Steges (30, 31, 48 bis 52), einer Rippe oder einer Labyrinthdichtung vorgesehen ist, wobei die am weitesten von den Fügeflächen entfernte Kammer (27) leer bleibt.

2. Fügeeinheit nach Anspruch 1, **dadurch gekennzeichnet, daß** die Sperre (20) mindestens einen Stauspalt (21 bis 23) bildet, der im Abstand vom Fügefeld (18) liegt, und der flächenkleiner als das Fügefeld (18) ist.

3. Fügeeinheit nach Anspruch 2, **dadurch gekennzeichnet, daß** die näher beim Fügefeld (18) liegende Kammer (25, 28) größer als die andere Kammer (26, 27) ist, und daß vorzugsweise die zum Fügefeld (18) quer liegende Höhe (40) der Kammern (25 bis 28) gleich groß ist.

4. Fügeeinheit nach einem der vorhergehenden Ansprüche, **dadurch gekennzeichnet, daß** mindestens eine der Kammern (25 bis 28) durch Gleitreibung an den Fügeflächen (16, 17) volumenvariabel ist, aber bei kleinstem Volumen ein Restvolumen zur Aufnahme des Fügemateriales (19) hat, und daß vorzugsweise mindestens eine unmittelbar an das Fügefeld (18) anschließende Kammer (25 bzw. 28) breiter als wenigstens eine weiter entfernt vom Fügefeld (18) liegende Kammer (26, 27) ist.

5. Fügeeinheit nach einem der Ansprüche 2 bis 4, **dadurch gekennzeichnet, daß** der Stauspalt (21 bis 24) schmaler als das Fügefeld (18) ist, und vorzugsweise in einer relativ zum Fügefeld (18) versetzten Ebene (43 bzw. 44) liegt.

6. Fügeeinheit nach einem der Ansprüche 2 bis 5, **dadurch gekennzeichnet, daß** mindestens zwei Stauspalte (21 bis 23) auf derselben Seite des Fügefeldes (18) liegen, deren Ebenen (43, 44) relativ zueinander versetzt sind.

7. Fügeeinheit nach einem der vorhergehenden Ansprüche, **dadurch gekennzeichnet, daß** an beiden Seiten des Fügefeldes (18) Kammern (25 bis 27 und 28) vorgesehen sind, deren Anzahl auf beiden Seiten des Fügefeldes (18) ggf. verschieden ist.

8. Fügeeinheit nach einem der vorhergehenden Ansprüche, **dadurch gekennzeichnet, daß** der Steg (30, 31, 48 bis 52) eine Steghöhe aufweist, die mindestens ein-einhalbfach bis mindestens dreifach so groß wie die Stegdicke (29) ist, der Steg über den größten Teil seiner Steghöhe im wesentlichen konstante Dicke hat und rechtwinklig zum Fügefeld (18) begrenzt ist.

9. Fügeeinheit nach einem der vorhergehenden Ansprüche, **dadurch gekennzeichnet, daß** mehrere Stege (30, 48 bis 51) abwechselnd entgegengesetzt frei ausragen, daß insbesondere zwei beiderseits unmittelbar benachbart zum Fügefeld (18) liegende Stege (49, 51) in derselben Richtung frei ausragen, und daß vorzugsweise ein entgegen mindestens einem benachbarten Steg (49, 51) frei vorstehender, eine der Fügeflächen (16) aufweisender, Fügesteg (30) mindestens die Hälfte bis zwei Drittel der Höhe der Stege aufweist.

10. Fügeeinheit nach einem der vorhergehenden Ansprüche, **dadurch gekennzeichnet, daß** die Fügeflansche (8, 9) beiderseits des Fügefeldes (18) äußere Flächen (6, 7) bilden, die quer zum Fügefeld (18) liegen, daß die Kammer (25 bis 28) von quer zu den äußeren Flächen (6, 7) liegenden und einander gegenüberliegenden Bodenflächen (32, 33) begrenzt ist, und daß ein Stauspalt (23) mit Abstand zwischen den Ebenen dieser Bodenflächen (32, 33) liegt, daß insbesondere der Stauspalt an diejenige äußere Fläche (6) anschließt, die eine Behälterinnenseite bildet, und von zwei Stegen (50, 52) begrenzt ist.

11. Fügeeinheit nach einem der vorhergehenden Ansprüche, **dadurch gekennzeichnet, daß** mindestens ein Fügeflansch (8, 9) an seiner von den Flanschflächen abgekehrten Seite mindestens eine vorstehende Verstärkung (46), wie eine Rippe, aufweist, daß insbesondere zwei vorstehende Verstärkungen (4 bzw. 5, 46) eine Vertiefung (47) bilden, wobei eine der Verstärkungen eine Kammerwand (4, 5) eines Behälters bildet.

## Claims

1. A jointing unit for bonding seams (10) such as fusion or welded joints, more particularly vibration welds, including jointing flanges (8,9) comprising opposing flange surface areas with jointing surface areas (16,17) to be secured to each other in a jointing zone (18) by jointing material (19), at least one element for receiving jointing material (19) emerging from between said jointing surface areas (16,17), such as attrition particles being provided and comprising at least two juxtaposed chambers (25,26,27), **characterized in that** between said chambers a retention member (20) in the form of a retention gap (21 to 23), such as a web (30,31,48 to 52), a rib or a labyrinth seal is provided, the chamber (27) remotest from said jointing surface areas remaining empty.

2. The jointing unit as set forth in claim 1, **characterized in that** said retention member (20) comprises at least one retention gap (21 to 23) located spaced away from said jointing zone (18) and having a surface area smaller than that of said jointing zone (18).

3. The jointing unit as set forth in claim 2, **characterized in that** said chamber (25,28) located nearer to said jointing zone (18) is larger than the other chamber (26,27), and preferably said chambers (25 to 28) being the same in height (40) located transversely to said jointing zone (18).

4. The jointing unit as set forth in any of the preceding claims, **characterized in that** at least one of said chambers (25 to 28) is variable in volume by sliding friction at said jointing surface areas (16,17), but having a residual volume for receiving said jointing material (19) at the smallest volume, and preferably at least one chamber (25 or 28) directly adjoining said jointing zone (18) being wider than at least one chamber (26,27) located more remotely from said jointing zone (18).

5. The jointing unit as set forth in any of the claims 2 to 4, **characterized in that** said retention gap (21 to 24) is narrower than said jointing zone (18), and preferably located in a plane (43 or 44) staggered relatively to said jointing zone (18).

6. The jointing unit as set forth in claim 2 to 5, **characterized in that** at least two retention gaps (21 to 23) are located on the same side of said jointing zone (18), the planes (43,44) of which are staggered relative to each other.

7. The jointing unit as set forth in any of the preceding claims, **characterized in that** chambers (25 to 27 and 28) are provided on both sides of said jointing zone (18), the number of which on both sides of said jointing zone (18) may differ.

8. The jointing unit as set forth in any of the preceding claims, **characterized in that** said web (30,31,48 to 52) comprises a height which is at least one/one-and-a-half to at least three times said web thickness (29), said web having a substantially constant thickness over most of its height, and is definined at right angles to said jointing zone (18).

9. The jointing unit as set forth in any of the preceding claims, **characterized in that** several webs (30,48 to 51) freely protrude alternatingly contrary to each other, more particularly two webs (49,51) located on both sides directly adjoining said jointing zone (18) freely protruding in the same direction, and preferably one jointing web (30) freely protruding contrary to at least one adjoining web (49,51) and comprising one of said jointing surface areas (16) being at least half to two-thirds as high as said webs.

10. The jointing unit as set forth in any of the preceding claims, **characterized in that** said jointing flanges (8,9) form on both sides of said jointing zone (18) outer surfaces (6,7) located transversely to said jointing zone (18), said chamber (25 to 28) being defined by bottom surface areas (32,33) located transversely to said outer surfaces (6,7) and opposing each other, and a retention gap (23) being located spaced away from and between the planes of said bottom surface areas (32,33), more particularly said retention gap adjoining said outer surface (6) forming an inner side of a tank, and defined by two webs (50, 52).

11. The jointing unit as set forth in any of the preceding claims, **characterized in that** at least one jointing flange (8, 9) comprises at its side facing away from said flange surface areas at least one protruding reinforcement (46) such as a rib, more particularly two protruding reinforcements (4 or 5, 46) forming a recess (47), one of said reinforcements forming a chamber wall (4,5) of a tank.

## Revendications

1. Unité d'assemblage pour joints obtenus par adhérence (10), tels que des joints obtenus par fusion ou par soudage, notamment par soudage par vibrations, avec des brides de jonction (8, 9), qui présentent des surfaces de bride situées l'une en face de l'autre, présentant des surfaces de jonction (16, 17) raccordées entre elles dans un champ de jonction (18) par un matériau de jonction (19), étant prévu au moins un logement pour le matériau de jonction (19) sortant entre les surfaces de jonction (16, 17), tels que des déchets produits par abrasion, le logement présentant au moins deux chambres (25, 26, 27) situées l'une à côté de l'autre, **caractérisée en ce que** entre les chambres est prévu un arrêt (20) sous forme d'une fente de retenue (de 21 à 23), telle qu'une traverse (30, 31, de 48 à 52), une nervure ou une garniture à labyrinthe, la chambre (27) la plus éloignée des surfaces de jonction restant vide.

2. Unité d'assemblage d'après la revendications 1, **caractérisée en ce que** l'arrêt (20) forme au moins une fente de retenue (de 21 à 23) située à une certaine distance du champ de jonction (18) et présentant une surface plus petite que le champ de jonction (18).

3. Unité d'assemblage d'après la revendications 2, **caractérisée en ce que** la chambre (25, 28) plus proche du champ de jonction (18) est plus grande que l'autre chambre (26, 27), et **en ce que** de préférence la hauteur (40) des chambres (de 25 à 28) située transversalement par rapport au champ de jonction (18) est la même.

4. Unité d'assemblage d'après une des revendications précédentes, **caractérisée en ce que** au moins une des chambres (de 25 à 28) est variable dans son volume par friction de glissement aux surfaces de jonction (16, 17), mais présente un volume résiduel pour le logement du matériau de jonction (19) quand le volume est réduit au maximum, et **en ce que** de préférence au moins une chambre (25 ou encore 28) qui fait directement suite au champ de jonction (18) est plus large qu'au moins une chambre (26, 27) plus éloignée du champ de jonction (18).

5. Unité d'assemblage d'après une des revendications de 2 à 4, **caractérisée en ce que** la fente de retenue (de 21 à 24) est plus étroite que le champ de jonction (18) et qu'elle se trouve de préférence dans un plan (43 ou encore 44) décalé par rapport au champ de jonction (18).

6. Unité d'assemblage d'après une des revendications de 2 à 5, **caractérisée en ce qu'**au moins deux fentes de retenue (de 21 à 23), dont les plans (43, 44) sont décalés l'un par rapport à l'autre, se trouvent du même côté du champ de jonction (18).

7. Unité d'assemblage d'après une des revendications précédentes, **caractérisée en ce que** sur les deux côtés du champ de jonction (18) sont prévues des chambres (de 25 à 27 et 28), dont le nombre diffère éventuellement sur les deux côtés du champ de jonction (18).

8. Unité d'assemblage d'après une des revendications précédentes, **caractérisée en ce que** la traverse (30, 31, de 48 à 52) présente une hauteur de traverse au moins une fois et demi jusqu'à au moins trois fois plus grande que l'épaisseur de traverse (29), que la traverse présente sur la plus grande partie de sa hauteur de traverse une épaisseur essentiellement constante et qu'elle est délimitée en direction orthogonale par rapport au champ de jonction (18).

9. Unité d'assemblage d'après une des revendications précédentes, **caractérisée en ce que** plusieurs traverses (30, de 48 à 51) saillent librement dans des directions alternativement opposées, **en ce que** notamment deux traverses (49, 51) situées des deux côtés à proximité immédiate du champ de jonction (18) saillent librement dans une même direction, et **en ce que** de préférence une traverse de jonction (30) qui saille librement en direction opposée par rapport à au moins une traverse (49, 51) limitrophe et qui présente une des surfaces de jonction (16), présente au moins la moitié jusqu'à deux tiers de la hauteur des traverses.

10. Unité d'assemblage d'après une des revendications précédentes, **caractérisée en ce que** les brides de jonction (8, 9) des deux côtés du champ de jonction (18) forment des surfaces extérieures (6, 7) situées transversalement par rapport au champ de jonction (18), **en ce que** la chambre (de 25 à 28) est délimitée par des surfaces de fond (32, 33) situées l'une en face de l'autre et transversalement par rapport aux surfaces extérieures (6, 7), et **en ce que** une fente de retenue (23) se trouve, avec un certain écart, entre les plans de ces surfaces de fond (32, 33), **en ce que** notamment la fente de retenue fait suite à cette surface extérieure (6), qui forme une face intérieure de récipient et qui est délimitée par deux traverses (50, 52).

11. Unité d'assemblage d'après une des revendications précédentes, **caractérisée en ce qu'**au moins une bride de jonction (8, 9) présente de son côté opposé aux surfaces de bride au moins un renforcement (46) saillant, tel qu'une nervure, **en ce que** notamment deux renforcements (4 ou encore 5, 46) saillants forment un creux (47), l'un des renforcements formant une paroi de chambre (4, 5) d'un récipient.
